# EUROPEAN PATENT SPECIFICATION

(11) **EP 1 098 389 B1**
(45) Date of publication and mention of the grant of the patent: **13.04.2005**
(21) Application number: 99124563.0
(22) Date of filing: 09.12.1999
(51) Int. Cl.: H01Q 1/24, H04B 1/38, H04M 1/02

(54) **Portable radio communication device, such as a portable telephone provided with frictional supporting means**
Tragbares Funkgerät, wie Mobiltelefon, ausgestattet mit Reibungsunterstützung
Appareil de communication radio portable comme téléphone mobile à support de friction

(30) Priority: 03.11.1999 EP 99121793
(43) Date of publication of application: 09.05.2001
(73) Proprietor: Q-Free MagCom AS, 1366 Lysaker (NO)
(72) Inventor: Stene, Henning, 0286 Oslo (NO); Sörensen, Inge, 0264 Oslo (NO); Svedberg, Martin, 1363 Hövik (NO)
(74) Representative: Niederkofler, Oswald A., Dipl.-Phys.

(56) References cited:
- EP-A- 0 391 020
- EP-A- 0 683 026
- WO-A-92/07372
- WO-A-97/36380
- WO-A-99/43040
- GB-A- 2 330 979
- US-A- 5 383 091

## Description

The present invention relates to portable radio communication devices, and more particularly, to a portable telephone adapted for use as a desktop device.

### BACKGROUND OF THE INVENTION

Portable radio communication devices are widely used at present. In particular mobile or cellular telephones have become essential so that they may be communicated or be accessed substantially regardless of their location. Mobile telephones are becoming even more popular with growing application possibilities. For example, the so called WAP (Wireless Application Protocol) standard allows wireless communication with the world-wide-web. The use of the WAP standard enables a portable telephone to access certain web pages in the world-wide-web which are programmed in accordance to the WAP standard so that the web page may be displayed on the screen section of the portable telephone. Therefore, the use of WAP portable telephones extends the cellular phone services to new applications, such as one-line information access of share prices, flight schedules, traffic information, actual news etc., or performing electronic commerce services via the internet. However, although performance has been greatly improved and functionality has been greatly expanded with modern portable telephones, operability and handling of the devices have remained basically the same.

Conventional portable telephones are carried on the user's person and are designed to be used by holding the device in the user's hand. However, a portable telephone which enables use for advanced applications, such as advanced WAP applications, may not be appropriately operated when held in the user's hand. For example, when pressing the keys of the keypad the portable phone housing may become unstable and slide away from the operating position.

Furthermore, conventional mobile telephones take the form of a basically rectangular body having on one side a face which carries a keypad for operating the device, a speech receiving section, a speech emitting section and a screen for displaying visual information. Usually the keyboard and the viewing screen are located between the speech receiving and transmitting sections in a basically planar surface of the portable phone. When the portable telephone is for example placed on a desk and operated like any other desktop device the readability of the information visualised on the screen is reduced due to the angled position between the user's head and the screen of the mobile telephone and possible unfavourable reflections of the surrounding light sources. Furthermore, in conventional portable telephones the size of the screen customarily is small so that operability is very low.

A mobile telephone according to the preamble of claim 1 is known from document EP 0 391 020 A1.

### SUMMARY OF THE INVENTION

It is, therefore, an object of the present invention to provide a portable radio communication device having better operability.

Further, it is an other object of the present invention to provide a portable or cellular telephone which ensures good operability when the phone is used for advanced applications, such as WAP applications.

To this end, according to one aspect, the invention is directed to a portable radio communication device as defined in claim 1, wherein the housing defines at least partially a substantially planar supporting surface for supporting the portable radio communication device when, for example, positioned on a planar supporting surface, such as a desk, or mounted in a docket station, such as a charging station or a personal computer docking station. In this way the portable radio communication device according to the present invention may be operated in at least two operation modes, namely, in a first mode, when the communication device is positioned on a desk on its supporting surface and used like any general electronic desk device for office use, e.g. a portable personal computer, calculator or electronic personal organiser, and, as the second operation mode, when the phone is held in the hand of the user to be used for common speech communication and, if desired, also for the other applications. In both operation modes the frictional supporting means on the outer supporting surface of the housing ensure that the portable communication device is fixed basically in one position. This is particularly important when the device is placed on the top of a table and the user is working on-line, e.g. connected to the world-wide-web. The frictional supporting means according to the invention prevent the portable communication device from sliding away from the operating position on the surface of the table and ensure that the device is stable providing good operability of the keyboard of the device as well as good readability of display. Therefore, the provision of outer frictional supporting means according to the invention provides new alternatives and modes of application when, for example, used as a desktop device as well as a conventional cellular phone for speech communication.

Preferred embodiments of the invention are described in the dependent claims.

Accordingly, in a preferred embodiment of the invention, the supporting means are made from a frictional flexible material, such as synthetic or natural rubber or any artificial elastomeric material. Then in addition the supporting means provide a protection layer to protect the housing of the communication device from mechanical and other types of environmental damage.

In a further preferred embodiment of the invention the material of the supporting means; in particular when made from a rubber material, contain electrically conductive components or compounds for providing magnetic and electromagnetic shielding of the portable radio communication device. Preferably, the conductive compounds are selected from one of metal additives, silicon additives or carbon additives or any combination thereof. In this way the supporting means protect the electronic devices located inside the housing of the radio communication device against magnetic and electromagnetic influence from the outside and provides shielding against the emittance of electromagnetic signals from the communication device to the surroundings. In addition, when the antenna of the radio communication device is arranged to be located behind the frictional supporting means, for example in an operational mode of the communication device, the conductive supporting means also provide a shielding to the user's body, in particular the head of the user, against radiation emitted by the antenna. Because of this arrangement the electromagnetic field incidence on the user's body is reduced due to reflection of radiation by the frictional supporting means; and hence the peak SAR (specific absorption rate) in the user's body is also reduced. At the same time the radiation efficiency of the antenna is improved due to the lower power absorption in the user's body.

Such type of profiles ensure that the elevated sections protruding through the corresponding openings of the supporting surface are fixed or locked on that supporting surface in a position matching with said openings of the supporting surface after assembling of the housing.

According to another aspect of the present invention, the housing of the portable radio communication device comprises at least a first and second housing parts, wherein these housing parts are movably connected to each other allowing the housing parts to be moved between a first or resting position and a second or operating position, wherein at least one of said housing parts defines a substantially planar outer supporting surface which comprises frictional supporting means for supporting the portable radio communication device, for example, when positioned on a table. Preferably, the first and second housing parts are rotatably connected to each other by a hinge such that in the resting position both housing parts are basically covering each other and in the operating position the housing parts defining an obtuse angle, thereby providing a foldable communication device which satisfies the requirement for compactness. In a preferred embodiment the first housing part houses a keypad and the second part houses a display means of the radio communication device, and wherein the first housing part defines a supporting surface when said housing parts are in said operating position. In this way the radio communication device of the invention has a design similar to a portable desk equipment, such as a personal or mini computer, and may advantageously be operated in the same manner when, for example, the radio communication device is located on a table and the user is working on-line.

In addition, in a foldable radio communication device according to the present invention preferably an antenna is located on top of the first housing part such that the antenna is placed behind the second housing part, when the housing parts are moved in the open or operating position and when the supporting means on the outer surface of the first and/or second housing parts are preferably made from a RF shielding material the specific absorption of antenna radiation in the user's body can considerably be reduced.

### BRIEF DESCRIPTION OF THE DRAWINGS

Further features and advantages of the present invention will be apparent upon review of the following description of preferred embodiments of the present invention with reference to the accompanying drawings, in which:
Fig. 1 is a perspective view of a preferred portable telephone embodying the present invention in an open position;
Figs. 2 a), b) and c) show the portable telephone of Fig. 1 in bottom view (Fig. 2a), side view (Fig. 2b) and top view (Fig. 2c) in a closed position;
Figs. 3 a) and b) show the portable telephone of Fig. 1 in top view (Fig. 3a) and side view (Fig. 3b) in an open position;
Fig. 4 is an exploded view of an output section of the portable telephone according to Fig. 1;
Figs. 5 a) and b) show exploded views of an input section of the portable telephone according to Fig. 1;
Fig. 6 is a partial cross sectional view of the input section of the portable telephone according to Fig. 5;
Fig. 7 is a cut-away perspective view of the output section of the portable telephone according to Fig. 1;
Fig. 8 is an enlarged perspective view of a hinge connection between the input and output sections of the portable telephone of Fig. 1; and
Figs. 9 a), b) and c) show the hinge operation wherein the output section of the portable telephone is positioned in three different angles.

Before explaining embodiments of the invention in connection with a portable or mobile telephone in detail it is to be understood that the invention is not limited in its application to the details of construction and the arrangement of the components set forth in the following description or illustrated in the drawings. The invention is capable of including other embodiments or being carried out for similar portable radio communication devices emitting electromagnetic radiation. Also, it is to be understood that the phraseology and terminology employed herein are for the purpose of description and should not be regarded as limiting.

### DETAILED DESCRIPTION OF THE PREFERRED EMBODIMENTS

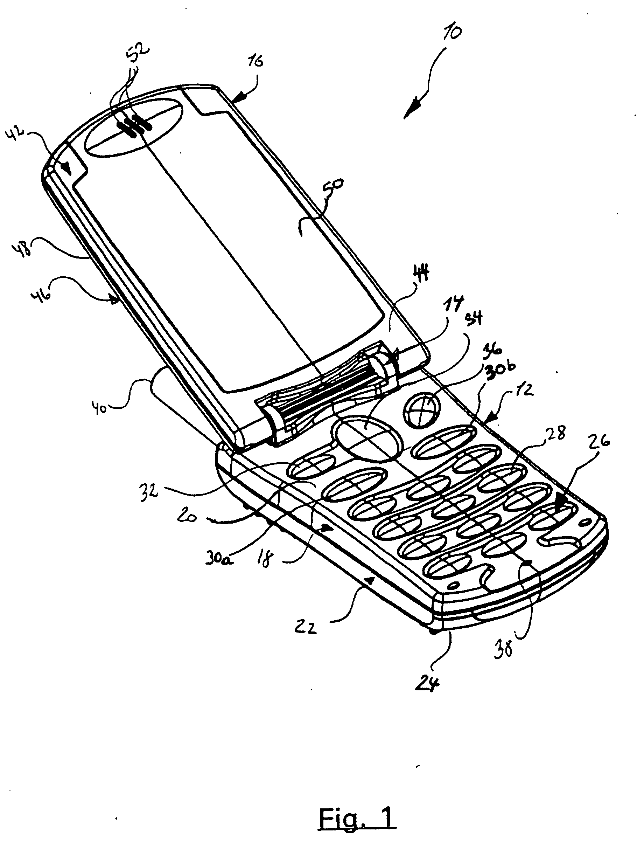

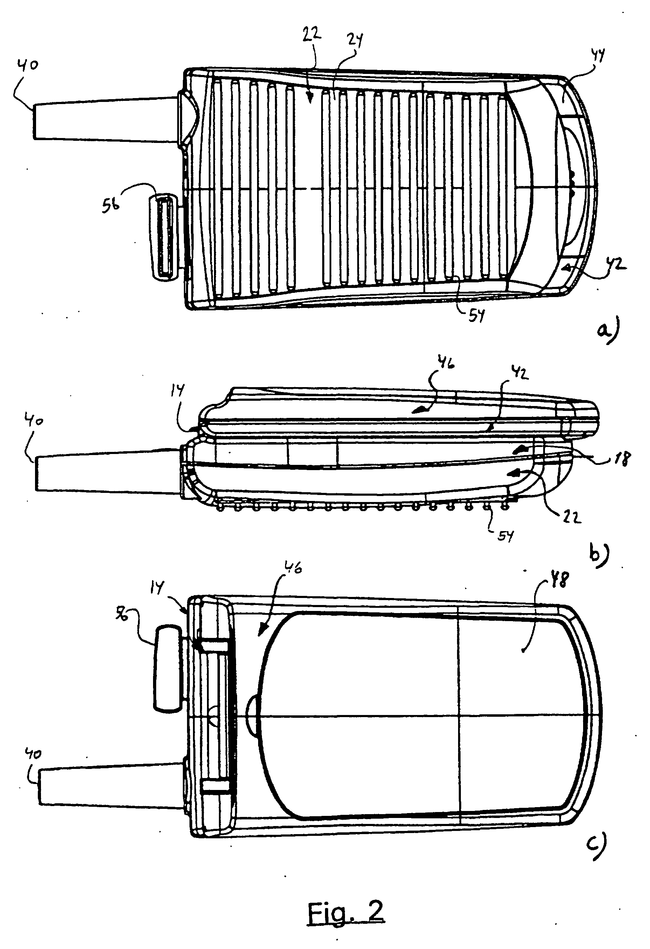

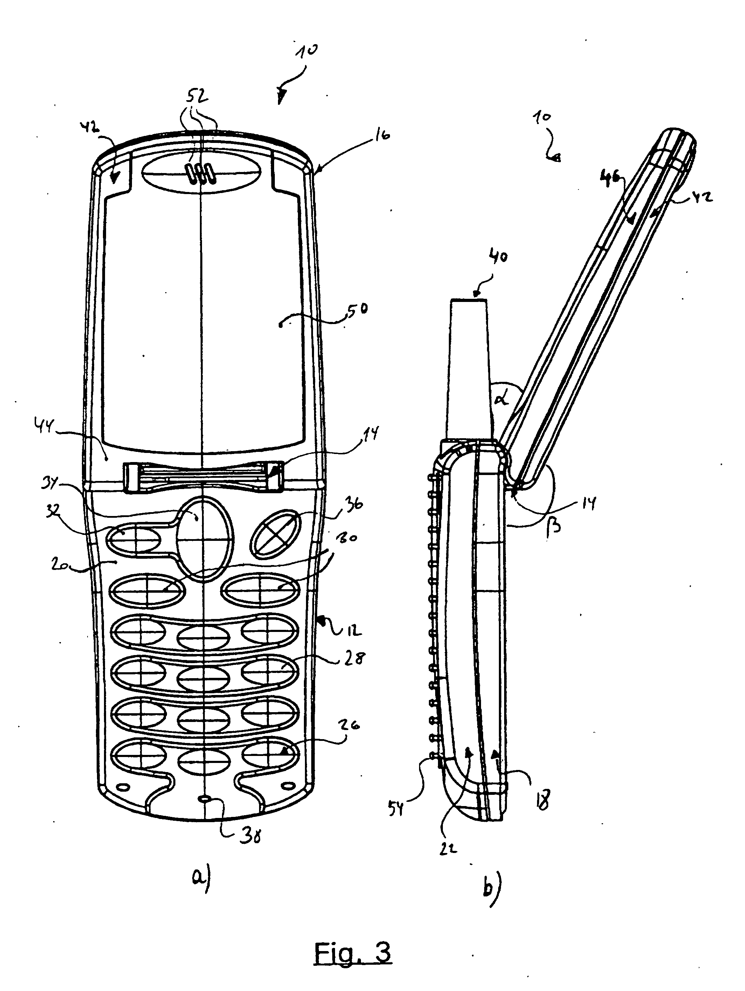

A portable or mobile telephone according to a preferred embodiment of the present invention shown in Fig. 1 designated in its entirety by numeral 10 comprises an input housing section 12 connected through a hinge 14 to an output housing section 16. The hinge 14 enables a rotation of the input housing section 12 and the output housing section 16 from an open or operating position of the portable telephone 10 (see Fig. 1) allowing operation of the input housing section 12 to a closed or resting position of the portable telephone 10 (see Fig. 2) disallowing operation of the input housing section 12. Thus the hinge 14 provides means for folding the portable telephone 10 thereby reducing the length of the portable telephone 10 and improving its compactness. Both the input and output housing sections 12, 16 are made from a electromagnetic shielding material in order to shield nearby body parts of the user of the portable telephone 10 from electromagnet radiation emitted by the phone 10 or at least reduce irradiation of the user.

The input housing section 12 comprises an inner part 18 having an inner surface 20 accessible for an user of the portable telephone 10 when the portable telephone 10 is in an open position and not accessible for the user of the portable telephone 10 when the portable telephone 10 is in a closed position. The input housing section 12 further comprises an outer part 22 having an outer supporting surface 24 (not visible in Fig. 1) displaced parallel to the inner surface 20. The outer supporting surface 24 of the outer part 22 defines a basically planar surface for supporting the portable telephone 10 for example on a table or in the user's hand.

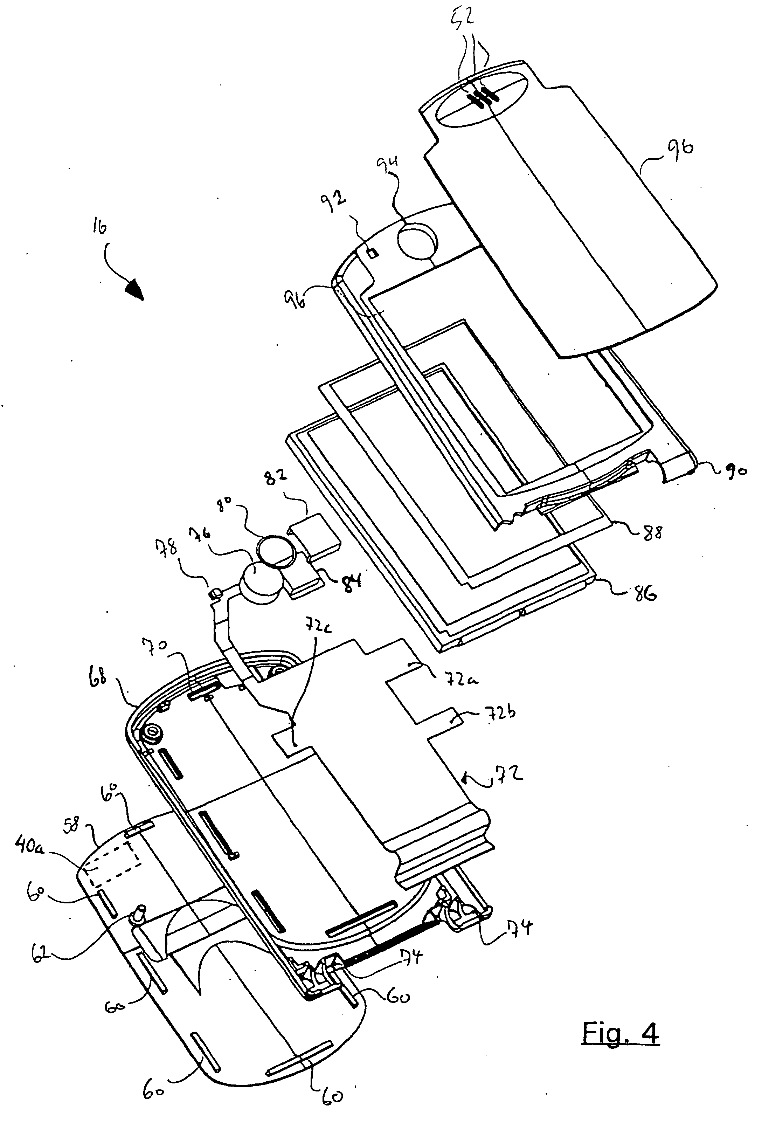

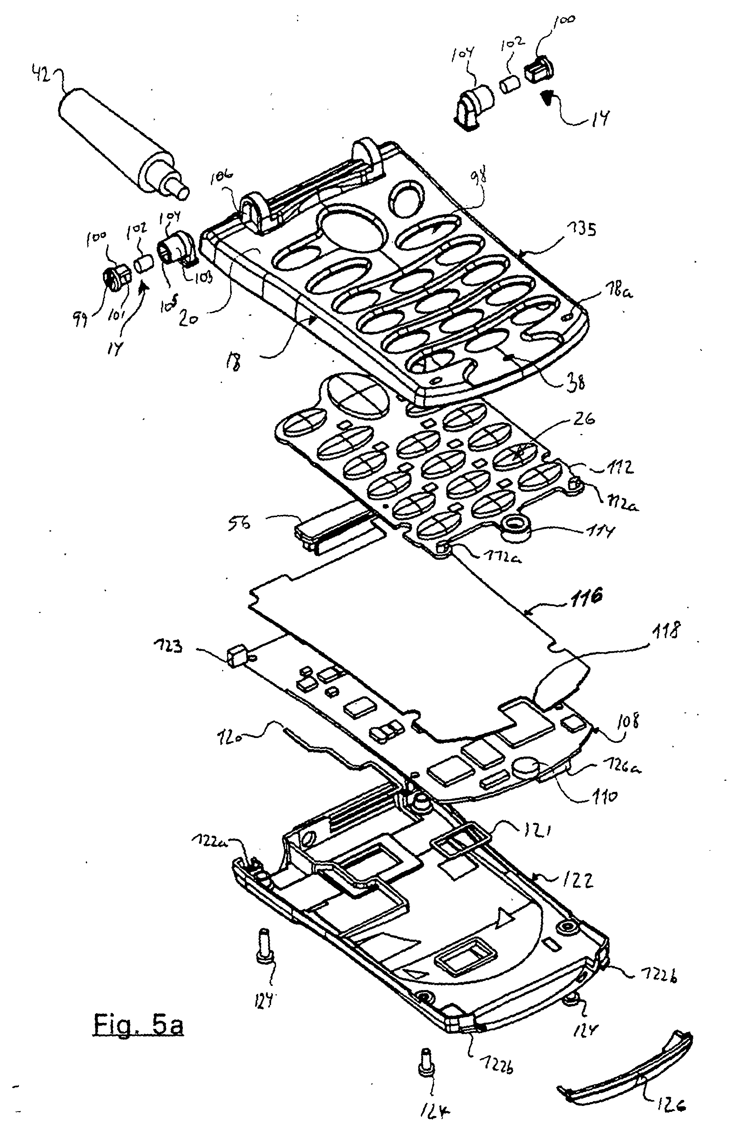

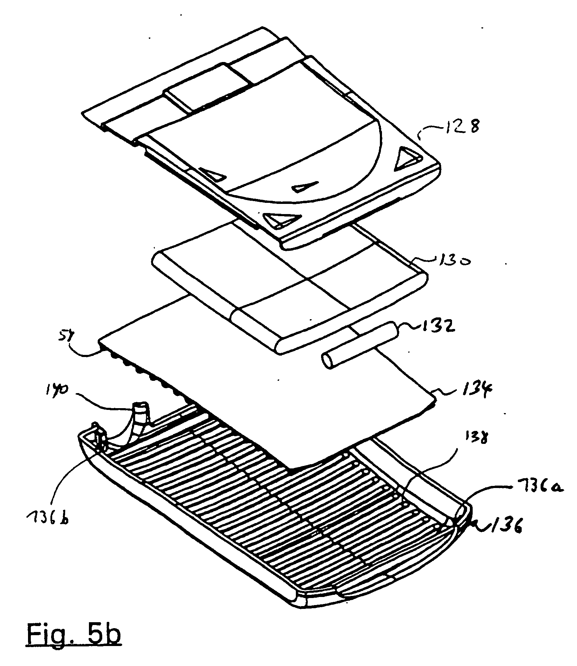

A keypad designated in its entirety by numeral 26 is positioned on the inner surface 20 of the inner part 18. The keypad 26 provides means for operating the portable telephone 10 to perform various tasks such as for example dialling a phone number, writing, deleting, sending or reading messages, writing, reading or removing addresses from the address book, or toggling through various menus. The keypad 26 preferably comprises twelve digit and letter keys 28, menu function keys 32, a selection or enter key 30a and a cancel key 30b, arrow keys 34 and an ON/OFF function key 36. The inner surface 20 of the inner part 18 of the input housing section 12 further includes an opening or a hole 38 for establishing acoustic communicating with a microphone 110 placed beneath the hole 38 and shown in Fig. 5a.

The antenna of the portable telephone 10 may be in the form of an aerial 40 being supported at and extending from the upper face of the input housing section 12 of the portable telephone 10. The aerial 40 transmits electromagnetic signals to and receives electromagnetic signals from telecommunication stations collecting and distributing telecommunication signals, such as telephone calls, messages, information data, etc., between, portable telephones or between portable telephones and standard fixed telephones and any other radio communication systems, such as a global computer network like the Internet.

The aerial 40 may be of a helix type antenna or have a dipole configuration. However, the antenna may also and preferably be of a planar type antenna which is fully integrated inside the input or output housing sections 12, 16, away from the head of the user, wherein the radiation of the antenna is shielded by the housing parts located between the antenna and the head of the user. One example of arrangement of planar antenna inside the output housing section 16 will be discussed later with regard to Fig. 4.

The output housing section 16 includes an inner part 42 having an inner surface 44 accessible for the user of the portable telephone 10 when the portable telephone 10 is in an open position (see Fig. 1) and not accessible for the user of the portable telephone 10 when the portable telephone 10 is in a closed position (see Fig. 2). The output housing section 16 further includes an outer part 46 having an outer surface 48 (not visible in Fig. 1) substantially parallel to the inner surface 44 of the inner part 42. The outer surface 48 and the outer supporting surface 24 provide a protecting cover for the inner surfaces 18 and 44 when the portable telephone 10 is in a closed position.

A large display section 50 is positioned on the inner surface 44 of the output housing section 16 including display menus such as for example an operation menu for the portable telephone 10. The display section 50 may consist of a liquid crystal display (LCD) or any similar semi-conducting type of display and enables the user of the portable telephone 10 to select any preferred menu listed on the display section 50 by moving a cursor by pressing the arrow keys 34 and choosing a menu by pressing the selection key 32. The output housing section 16 further includes a loudspeaker 76 placed beneath a series of slots 52, as shown in Fig. 4. These slots 52 establish an acoustic communication to the user's ear.

Figs. 2 a), b) and c) show the portable telephone 10 in a closed position in bottom, side and top views, respectively. On the backside of the input housing section 12 a series of rubber sections 54 protrude through the outer supporting surface 24 and provide a flexible and stable surface for the portable telephone 10 while for example lying on a table or in the user's hand. The rubber sections 54 may be formed by drawing elevated and profiled extensions of a rubber mat 134 placed on the inner side of the outer part 22 through slits provided in the outer supporting surface 24 by applying a vacuum to the outer supporting surface 24 of the outer,part 22. The profile of the rubber sections 54 in Fig.2 is mushroom like. The rubber sections 54 are preferably manufactured from a synthetic or natural rubber material. Preferably the rubber material comprises silicon and carbon. By introducing silicon and carbon into the rubber mat 134 additional electromagnetic shielding protection of the input housing section 12 is achieved. Hence the rubber mat 134 provides electromagnetic shielding from ambient electromagnetic noise as well as electromagnetic shielding to neighbouring electronic utilities from electromagnetic noise induced by the portable telephone 10. Further, the rubber mat 134 helps shielding the user's body from radiation emitted by the aerial 40 as well as the electronic components inside the housing. In addition the rubber section 54 provides a protection layer to protect the housing of the portable telephone 10 from mechanical and other environmental damage.

Additionally, the rubber sections 54 provide a soft frictional surface on the outer supporting surface 24 on the outer part 22 of the input housing section 12, which surface ensures that the portable telephone 10 is basically fixed in one position when, for example, placed on a table. Furthermore, the frictional surface ensures that the portable telephone 10 is stable during operation, i.e. the portable telephone 10 is level when, for example, placed on table while the set of keys 26 are pressed by the user. This feature ensures that the portable telephone 10 may be easily operated like any general electronic table equipment for office use, such as pocket computer, calculators or personal organisers.

Figs. 2 a) and b) also show a multipin terminal connector 56 for connecting the portable telephone 10 to transmit data from the telephone 10 to for example a personal computer or to transmit data from the telephone's 10 personal user card to external auxiliary equipment e.g. an external handset or a handfree set or a computer interface. The terminal connection may have any configuration, however, preferably the multipin terminal connector is a 15 pin female connection.

Figs. 3 a) and 3 b) show the portable telephone 10 in an open position in top and side views, respectively. According to Fig. 3 a) the display section 50 covers a predominant area of the inner surface 44 of the inner part 42 of the output housing section 16. Usually the display section 50 extends in the range of between 60% to 100% of the inner surface 44 such as ranges 60% to 80% or 65% to 75%. Preferably the display section 50 covers approximately 70% of the inner surface 44.

Furthermore Fig. 3 b) shows that, when the portable telephone 10 being in the open or operating mode, the aerial 40 is located behind the output housing section 16. The output housing section 16 located between the aerial and the user together with the input housing section 12 acts as an reflective shield for electromagnetic RF radiation emitted by the aerial 40 towards the user's head. Depending on the design of the output housing section 16 also an directional radiation pattern may be obtained. As will be discussed herein after, the material of the input and output housing sections 12, 16 is preferably a light weight and electrically conductive material, such as magnesium. When the portable telephone 10 being in use according to Fig. 3 b) part of radiation emitted by the aerial 40 is reflected by the conductive material of the housing, in particular the output housing section 16 of the telephone 10. Because of this arrangement the electromagnetic field incident on the user's body is minimised and hence the peak SAR (specific absorption rate) in the user's body is reduced. The radiation efficiency of the aerial 40 is also improved due to the lower power absorption in the user's body. Experiments on the portable phone 10 have shown that the reduction of radiation towards the head of the user depend on the angle α between the aerial 40 and the output housing section 16 in the operating position of the telephone 10: The radiation exposure of the user's body is reduced with decreasing values of α (or increasing values of the complementary angle β). Therefore, α is preferably of the order of 5°-65°, such as 15°-45°, preferably approximately 25° or within the range of 5°-15°, 15°-25°, 25°-35°, 35°-45°, 45°-55° or 55°-65°. On the opposite side into the open space in a direction away from of the user's head an improvement of the radiation efficiency in the order of at least 30% to 50% could be obtained under use of the shielding housing according to the present invention.

Further, it is to be noted that the housing of the portable telephone 10 provides magnetic and electromagnetic shielding against the radiation from the electronic components housed in the input and output housing section 12, 16 of the portable telephone 10.

Fig. 4 shows the output housing section 16 of the portable telephone 10 in exploded view. A flat rubber mat 58 constitutes a part of the outer surface 48 of the output housing section 16. The flat rubber mat 58 may be made from any synthetic or natural rubber material. However, the rubber mat 58 preferably includes silicon and carbon so as to provide additional electromagnetic shielding of the output housing section 16. The rubber mat 58 provides a soft frictional surface on the outer surface 48, which due to adhesive friction ensures that the portable telephone 10 becomes more stable for example during transportation in a pocket. Furthermore, the rubber mat 58 provides a protection layer to protect the housing of the portable telephone 10 from mechanical and other environmental damages.

The rubber mat 58 is fixed on the backside of an outer chassis 68 which includes a printed circuit board 72 and an overlying display 86 and a frame 88. All these components are covered by an inner chassis 90 comprising a transparent glass plate 96. Both the inner and outer chassis 68, 90 constitutes the output housing section 16. Bolts 62 are arranged within the output housing section 16 for holding the first printed circuit board 72, the display 86 and the frame 88 in a fixed position within the output housing section 16. Extensions 60 protrude from the rubber mat 58 and engage with corresponding receiving slits 70 in the outer chassis 68 for fixing the rubber mat 58 to the outer chassis 68.

The outer chassis 68 is manufactured from a conductive material. Preferably, the outer chassis 68 is made in magnesium so as to provide an effective electromagnetic shield protecting the user during a telephone call from magnetic and electromagnetic emissions from the portable telephone 10 without causing deterioration of the emitted signal in a direction away from the user's head. Due to the reflector characteristic of the outer chassis 68, as discussed above, the radiation efficiency in a direction away from the user's head is improved. In addition, the magnesium outer chassis 68 provides an electromagnetic shield of the electronic components included in the output housing section 16 of the portable telephone 10. Finally, the magnesium outer chassis 68 is a light weight conducting material and therefor particularly useful in constructing portable phones.

In an alternative preferred embodiment, the antenna is not located on the input housing section 16 of the portable telephone 10, as shown in Figs. 1 to 3, but preferably formed as a planar antenna 40a integrated onto the backside of the output housing section 16 of the portable telephone 10, as indicated with dashed lines in Fig. 4, shielded by the outer chassis 68 and positioned away from the head of the user. The planar antenna 40a is mounted between the rubber mat 58 and the outer chassis 68 or completely inside the output housing section 16, e.g. on the inner side of the outer chassis 68, and communicates via an opening on the upper face side of the output housing section 16 with the outside space.

Additionally, on the end connected to the input housing section 12 the outer chassis 68 includes shoulder rests 74 for incorporation of the hinge 14 allowing the output housing section 16 and the input housing section 12 to rotate into an open position or a closed position.

The first printed circuit board 72 comprises the loudspeaker 76, a light sensitive sensor 78, and provides control signals to the display 86 for displaying menu functions to the user. The first printed circuit board 72 further comprises a buzzer 84 for emitting acoustic signals, a rubber gasket 82 for directing the signals and a rubber ring 80 for preventing acoustic short circuiting between the front and the back of the loudspeaker 76 and avoiding undesired noise from the loudspeaker 76 when the loudspeaker 76 is in its operating position within the output housing section 16 of the portable telephone 10.

The display 86 serves to display menu functions of the portable telephone 10 to the user, in particular for advanced telecommunication, for example, with the world wide web (www). The size of the display 86 ensures that the user at all times may read and work on received messages as well as read and work on out going messages. The light sensitive sensor 78 communicates a light intensity signal to the control unit of the display 86 so as to automatically adjust the back lightening of display 86 and keys 26 in accordance with the ambient light conditions thereby enabling optimum intensity of the display 86 and at the same time save power.

The inner chassis 90 comprises a substantially rectangular opening 96 for establishing a view of the display 86, a substantially rectangular opening 92 matching the dimension and shape of the light sensitive sensor 78 for receiving the light sensitive sensor 78 and establishing a path for the ambient light to the light sensitive sensor 78, and a substantially circular opening 94 matching the dimension and shape of the loudspeaker 76 for receiving the loudspeaker 76 and establishing communication of sound from the loudspeaker 76 to the surroundings. The frame 88 positioned between the display 86 and the inner chassis 90 separates the display 86 from the inner chassis 90 and filling out any tolerances between the inner and outer chassis 90, 68 and the display 86, and preventing that dust enters into the housing of the telephone 10, especially into the visible area of the display 86.

The inner chassis 90 is manufactured from a conductive material. Magnesium is preferred in the present invention since as described above. Firstly, the magnesium inner chassis 90 causing the weight of the portable telephone 10 to be very low; secondly the magnesium inner chassis 90 provides an electromagnetic shield against irradiation of the user's body during use of the telephone 10; and thirdly the magnesium inner chassis 90 provides an electromagnetic shield of the electronic components incorporated into the output housing section 16 of the portable telephone 10. Additionally the magnesium material of the output housing section 16 establishes an electromagnetic protection of electronic appliances as the magnetic and electromagnetic emission towards the user's head from the portable telephone 10 is reduced. Fingers 72a, 72b and 72c of the first circuit board 72 hold this first board in position and provide an electrical ground connection to the main conductive chassis parts 68 and 90 of the output housing section 16.

On the top of the output housing section 16 a plate of glass 96 or any other relevant transparent material including plastics materials covers the inner chassis 90 for protecting the display 86, the light sensitive sensor 78 and the loudspeaker 76 inside the housing.

According to Figs. 5 a) and b) the input housing section 12 comprises an inner casing 135 covering the keypad 26 which overlays a touch sensitive screen 116 followed by a second printed circuit board 108. An intermediate separation chassis 122 separates the inner casing 135 from an outer casing 136 of the input housing section 12. The outer casing 136 covers a rubber mat 134 and battery means for the portable telephone 10.

Fig. 5 a) shows the inner casing 135 of the input housing section 12 of the portable telephone 10 manufactured in a conducting material, preferably magnesium, ensuring shielding of the second printed circuit board 108 from electromagnetic noise generated either by external electric appliances or generated by the first printed circuit board 72 included in the output housing section 16 and ensuring that the weight of the phone is kept low. In addition, the inner casing 135 acts as a shield for magnetic and electromagnetic radiation of the aerial 40. The inner casing 135 comprises holes 98 for receiving the keys of the keypad 26 therein and the hole 38 for conducting sound from the surroundings to the microphone 110 placed on the second printed circuit board 108. Additionally the inner casing 135 comprises a recess section 106 for receiving the hinge 14.

The keypad 26 is incorporated on a silicon rubber plate 112 providing a flexible press sensation during operation of the keys, which press sensation has been shown to be of ergonomic and psychological importance for users stroking keys. The silicon rubber plate 112 further incorporates a housing 114 for the microphone 110 thereby ensuring that the microphone is fixed to a position just below the hole 38 on the inner part 18 of the input housing section 12. A key stroke from the user activating a key on the flexible silicon rubber plate 112 is registered through contact on the touch sensitive surface 116 and communicated to the second printed circuit board 108. The touch sensitive surface 116 includes a recess 118 for allowing the microphone 110 to be received in the housing 114 on the silicon rubber plate 112. The silicon rubber plate 112 is provided with protrusions 112a made from the same material for preventing direct contact between the inner part 18 of the input housing section 12 and the inner part 42 of the output housing section 16. Protrusions 112a extend through holes 18a of the inner casing 135 and contact the surface of the inner part 42 to establish a space between the two inner parts 18 and 42 when the output housing section is snapped into a locked position, as shown in Figure 2, to prevent wear-out and undesired noise of the inner parts 18 and 42

A first seal member 120 provides high frequency shielding of the second printed circuit board 108 from electromagnetic emissions of the aerial 42 and a second seal member 121 provides shielding of the aerial 42 from electromagnetic emissions from a crystal controlling the timing of the second printed circuit board 108.

The separation chassis 122, which may be manufactured in any suitable plastics or conductive material, provides separation of the inner part 18 and the outer part 22 of the input housing section 12 of the portable telephone 10. Preferably, the separation chassis 122 is made from magnesium or any other conductive material which is stiff enough to resist the pressure from the keypad. The magnesium chassis 122 also protects the electronic components of the printed circuit board 108 against electromagnetic influence or emittance of RF signals. Four locking bolts 124 ensures that the separation chassis 122 and is fixed to the inner part 18.

An end section 126 is engageable with one end of the separation chassis 122 and provides a window for an infrared communication port 126a installed on the back of the printed circuit board 108.

According to Fig. 5 a) a shielding plug 56 is provided to prevent RF emittance which is coupled back from the aerial 42 to the electronic components inside the input housing section 12. This shielding plug 56 also functions as protection against dust and humidity.

According to Fig. 5 b) a primary battery 130 is sandwiched between an fixed cover 128 and the rubber mat 134, all together included in the outer casing 136 which is manufactured from magnesium or any other conductive shielding material. An additional internal battery provides a power backup function of the rechargeable primary battery 130 and enables the portable telephone 10 even in case of a discharge primary battery to maintain some functions, such as the clock and special operation functions. As described above, the rubber mat 134 comprises profiled parallel extensions 54. During assembly of the portable telephone 10, the profiled extensions 54 are forced into corresponding slits 138 formed in the outer casing 136 so as to provide an outer frictional surface of the outer section 22. The outer casing 136 further includes a recess 140 for receiving the aerial 42.

For access to the battery 130 the outer casing 136 can easily be mounted at and demounted from the separation chassis 122. Locking means on both ends of the outer casing 136 and the chassis 122 are provided. On the upper end of the intermediate chassis 122 flexible portions 123, preferably made of rubber, are received into corresponding apertures 122a on the intermediate chassis 122 forming a part of the locking mechanism for the outer casing 136. When mounting the outer casing 136 at the chassis 122 the extending parts 136b on the outer casing 136 (see Fig. 5b) are inserted into the apertures 122a of the chassis 122 from the backside wherein the chassis 122 and the outer casing 136 forming an acute angle between each other. By pushing the outer casing 136 on its upper end against the chassis 122, i. e. pushing the extending parts 136b against the flexible portions 123, and at the same time pivoting the outer casing 136 against the chassis 122 the locking protrusions 122b at the opposed end of the chassis 122 may be aligned with corresponding locking apertures 136a at the outer casing 136 (see Fig. 5b). By reducing the pressure on the flexible portions 123 the locking protrusions 122b may be positioned and inserted into the locking apertures 136a so as to lock the outer casing 136 to the chassis 122. The outer casing 136 may be demounted from the chassis 122 by following the same steps but in reversed order.

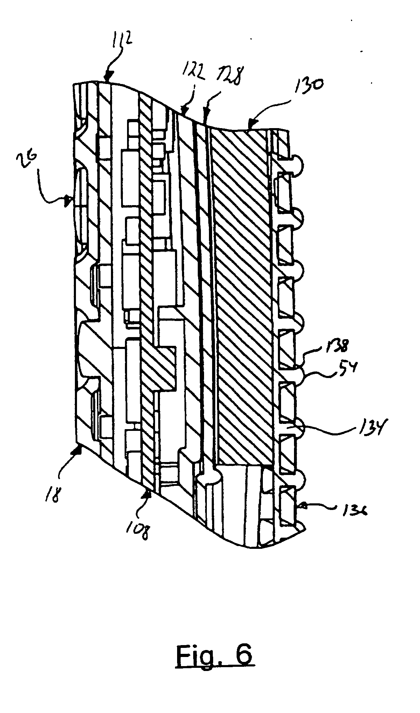

Fig. 6 shows a cross-sectional view of the input housing section 12 of the portable telephone 10. The profiled extensions 54 having mushroom profiles protrude through the slits 138 of the outer casing 136. By applying a vacuum to the outer surface of the outer casing 136 the profiled extension 54 are forced through the slits 138 and when in the final position are locked in position by the head of the mushroom profile. As can be seen in Fig. 6, the electronic components on the circuit board 108 are protected against electromagnetic influence from the outside and emittance to the outside by the adjacent separation chassis 122 and the surrounding housing parts, namely the inner case 135 and the outer casing 136 with rubber mat 134.

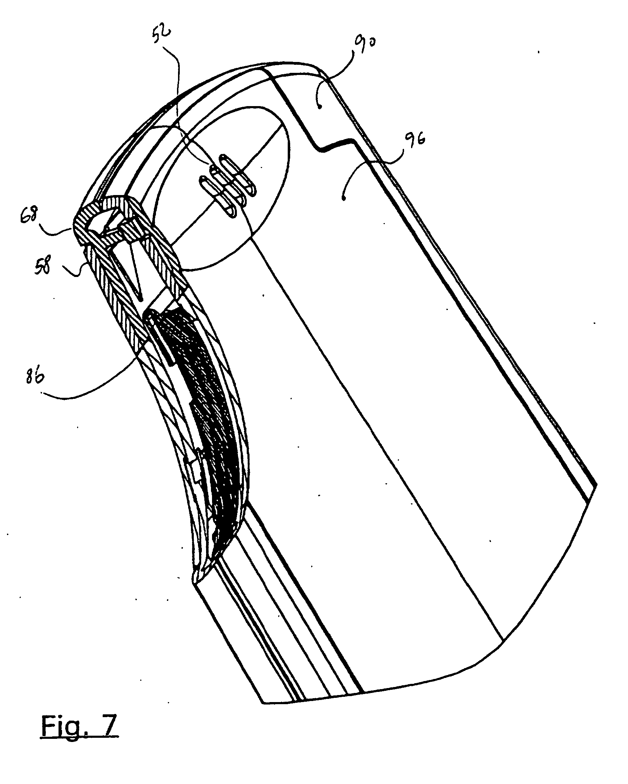

Fig. 7 shows a cut in the output housing section 16 providing an internal view of the output housing section 16.

As previously mentioned, the input and output housing sections 12, 16 are preferably rotatably connected by the hinge 14. As can be seen in Fig. 5 a), the hinge 14 comprises two couplings 104, which couplings 104 having one end received in a respective recess 106 provided on the adjacent end of the inner casing 135 of the input housing section 12. The other end of the couplings 104 constitute a cylinder having an outer circular surface 103 and defining an inner rectangular space 105. The inner space 105 of the couplings 104 receives a elastic spacer 102 preferably being cylindrical and a plug 100 having one end with a rectangular section 101 matching the dimension and shape of the inner rectangular space 105. On the opposed end the plug 100 defines a notch 99.

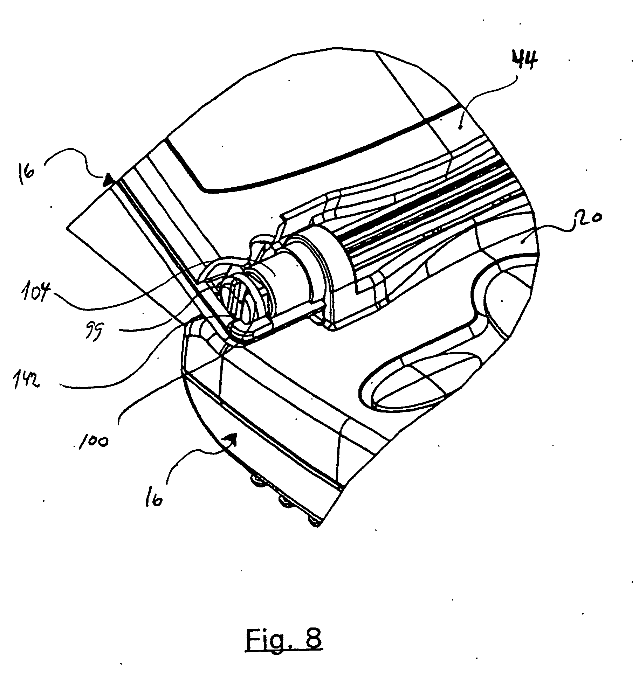

Fig. 8 shows in detail the hinge 14. As described above the hinge 14 comprises two couplings 104, two circular cylindrical elastic spacers 102 and two plugs 100 inserted inside the couplings 104 thereby providing a friction pressure between the plug 100 and the output housing section 16 of the portable telephone 10. The elastic spacer 102 being compressed and thereby establishing a pressure applied on the plug 100 versus the output housing section 16 of the portable telephone 10. The friction between each of the plugs 100 and the output housing section 16 of the portable telephone 10 ensures that a rotation of the input housing section 12 relative to the output housing section 16 may be fixed in any angle between the open or operating position and the closed position of the portable telephone 10. To ensure good readability of the display it is important to minimise reflections by rotation of the input housing section 12 relative to the output housing section 16 into the most favourable position in relation to surrounding light sources. This is especially important when the user is working on-line, e.g. connected to the world-wide web and having the device placed on the top of a desk. However, when the notch 99 provided on the outer face of the plug 100 falls in line with a matching protruding part 142 included in the output housing section 16, the output housing section 16 snaps into maximum open position or fully closed position.

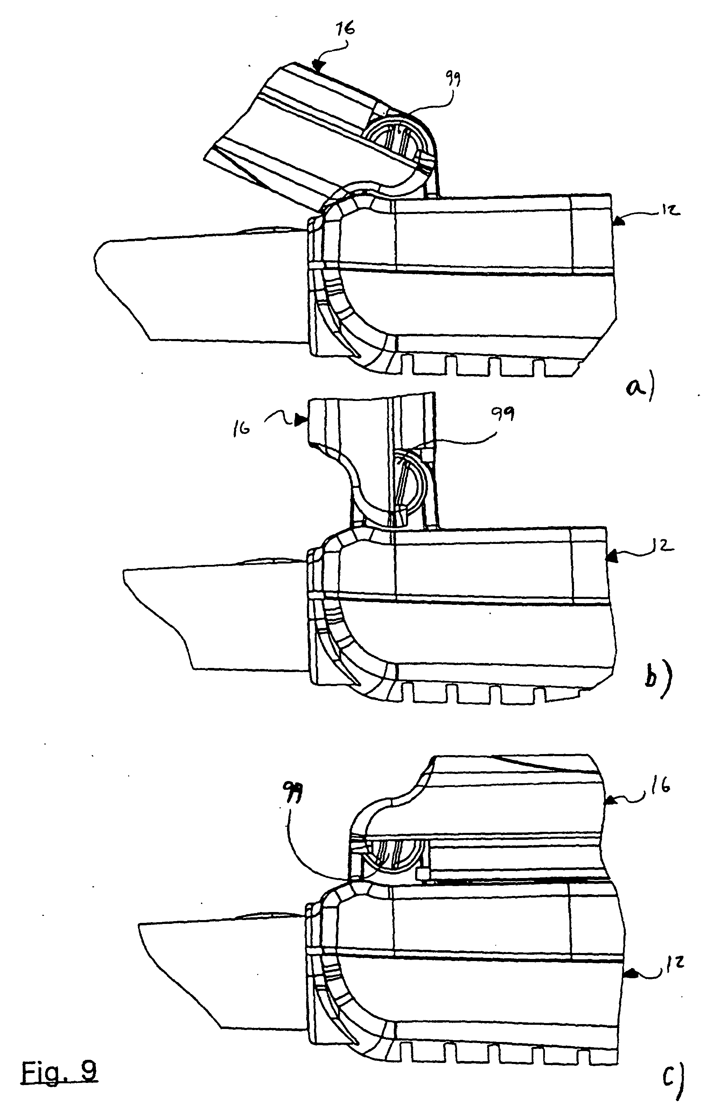

Fig. 9 a), b) and c) show alternative positions of the output housing section 16 relative to the input housing section 12 of the portable telephone 10. In Fig. 9 a) the output housing section 16 has snapped into the maximum open position in which position the output housing section 16 creates an angle of approximately 155° relative to the input housing section 12 of the portable telephone 10. The notch 99 is in this position pushed toward the matching protruding part 142 included in the output housing section 16 and falls in line therewith hence snapping the output housing section 16 into maximum open position and locking the output housing section 16 into maximum open position. In Fig. 9 b) the output housing section 16 is in an open position creating an angle of 90° relative to the input housing section 12 of the portable telephone 10. In this position the notch 99 is not in line with the protruding part 142 and therefor the output housing section 16 does not snap. In Fig. 9 c) the output housing section 16 has snapped into a closed position having the inner parts 44 and 20 of the input housing section and output housing section lay adjacent to each other and disallowing the user any access to the inner parts 44 and 20. Since the preferred maximum open position is 155° as opposed to 180° snapping into the maximum open position is controlled by one of the notches 99 provided in the hinge 14 and snapping into the closed position is controlled by the other of the notches 99.

## Claims

1. A portable radio communication device, such as a portable telephone (10), comprising a housing (12, 16) having a front side with user interface means (26; 50) and an opposed backside, wherein the backside of the housing at least partially defines a substantially planar outer supporting surface (24; 48) comprising non-slip supporting means (54, 134) for supporting said portable radio communication device, wherein said supporting means (54, 134) comprises a layer (134) having thereon a plurality of elevated supporting sections (54) protruding through corresponding openings of said supporting surface (24) and being positioned in a distance from each other, **characterized in that** the supporting sections (54) are designed to have a mushroom-like profile protruding through the corresponding openings of said supporting surface (24) such that each head of the mushroom-like profile (54) engages the outer surface of the supporting surface (24) for fixing the supporting means (54, 134) to the supporting surface.

2. The portable radio communication device according to claim 1, wherein said supporting means (54, 134) is made from a non-slip flexible material, such as synthetic or natural rubber or any artificial elastomeric material.

3. The portable radio communication device according to claims 1 or 2, wherein the material of said supporting means (54, 134) contains electrically conductive components for providing magnetic and electromagnetic shielding.

4. The portable radio communication device according to claim 3, wherein said conductive components are selected from one of metal additives, silicon additives or carbon additives or any combination thereof.

5. The portable radio communication device according to any one of the preceding claims, wherein said supporting means (54) comprises a series of parallel elevated sections extending substantially transversal to the longitudinal direction of the portable radio communication device.

6. The portable radio communication device according to any one of the preceding claims, wherein said elevated sections are inserted through corresponding openings (138) of the supporting surface (24) from behind.

7. The portable radio communication device according to claim 6, wherein said supporting layer (134) comprises a rubber mat having incorporated thereon elevated parallel rubber extensions received in corresponding slits provided on the supporting surface (24; 48), wherein said rubber extensions are adapted to be drawn through said slits on said supporting surface (24; 48) by applying vacuum to the supporting surface (24; 48).

8. The portable radio communication device according to any one of the preceding claims, wherein said housing comprises at least a first (12) and a second housing parts (16), wherein said housing parts are movably connected to each other allowing said housing parts to be moved between a first or resting position or a second or operating position, wherein at least one of said housing parts defining a substantially planar supporting surface (24; 48) and comprising said non-slip supporting means (54, 134).

9. The portable radio communication device according to claim 8, wherein said housing parts (12; 16) are rotatably connected to each other by a hinge.

10. The portable radio communication device according to claims 8 or 9, wherein a keypad (26) is housed within said first housing part (12) and a display means (15) is housed within said second housing part (16), and wherein said first housing part (12) defines said supporting surface (24; 48) when said housing parts are in said operating position.

11. The portable radio communication device according to anyone of claims 7 to 10, when depending on claim 3, wherein an antenna (40) is located at top of said first housing part (12) and is arranged behind said second housing part (16) when said housing parts are moved in said operating position.

## Patentansprüche

1. Tragbares Funkkommunikationsgerät, wie etwa ein tragbares Telefon (10), das ein Gehäuse (12, 16) mit einer Vorderseite, das ein Benutzerschnittstelleneinrichtung (26; 50) umfaßt, und einer gegenüberliegenden Rückseite aufweist, wobei die Rückseite des Gehäuses mindestens teilweise eine im wesentlichen ebene äußere Auflagefläche definiert (24; 48), die eine rutschfeste Auflageeinrichtung (54, 134) zum Halten des tragbaren Funkkommunikationsgerätes umfasst, wobei die Auflageeinrichtung (54, 134) eine Schicht (134) aufweist, die mehrere vorstehende Auflageabschnitte (54) umfaßt, welche durch entsprechende Öffnungen der Auflagefläche (24) hindurch ragen und in einem Abstand voneinander angeordnet sind, **dadurch gekennzeichnet, dass** die Auflageabschnitte (54) so gestaltet sind, dass sie jeweils ein pilzartiges Profil aufweisen, welches durch die entsprechenden Öffnungen der Auflagefläche (24) hindurch ragt, derart, dass jeder Kopf des pilzartigen Profils (54) mit der Außenfläche der Auflagefläche (24) zusammenwirkt, um die Auflageeinrichtung (54, 134) an der Auflagefläche zu fixieren.

2. Tragbares Funkkommunikationsgerät nach Anspruch 1, wobei die Auflageeinrichtung (54, 134) aus einem rutschfesten flexiblen Material, wie ein synthetisches oder natürliches Gummi oder ein künstliches elastomeres Material, hergestellt ist.

3. Tragbares Funkkommunikationsgerät nach Anspruch 1 oder 2, wobei das Material der Auflageeinrichtung (54, 134) elektrisch leitfähige Komponenten enthält, um eine magnetische und elektromagnetische Abschirmung zur Verfügung zu stellen.

4. Tragbares Funkkommunikationsgerät nach Anspruch 3, wobei die leitfähigen Komponenten ausgewählt sind aus Metallzusätzen, Silizium-Zusätzen oder Kohlenstoff-Zusätzen sowie einer eine Kombination daraus.

5. Tragbares Funkkommunikationsgerät nach einem der vorangehenden Ansprüche, wobei die Auflageeinrichtung (54) eine Reihe von parallelen erhöhten Abschnitten aufweist, die sich im Wesentlichen längs zur Längsrichtung des tragbaren Funkkommunikationsgerätes erstrecken.

6. Tragbares Funkkommunikationsgerät nach einem der vorangehenden Ansprüche, wobei die hervorstehenden Abschnitte durch die entsprechenden Öffnungen (128) der Auflagefläche (24) von hinten eingesetzt sind.

7. Tragbares Funkkommunikationsgerät nach Anspruch 6, wobei die Halteschicht (134) eine Gummimatte mit darin enthaltenen hervorstehenden, parallelen Gummivorsprüngen umfasst, die in entsprechende Schlitze eingreifen, die auf der Auflagefläche (24; 48) vorgesehen sind, wobei die Gummivorsprünge so gestaltet sind, dass sie durch die Schlitze auf der Auflagefläche (24; 48) gezogen werden, in dem ein Vakuum auf die Auflagefläche (24; 48) angewendet wird.

8. Tragbares Funkkommunikationsgerät nach einem der vorangehenden Ansprüche, wobei das Gehäuse mindestens ein erstes (12) und ein zweites Gehäuseteil (16) umfasst, wobei die Gehäuseteile zueinander beweglich verbunden sind, so dass die Gehäuseteile zwischen einer ersten Ruhestellung oder einer zweiten Betriebsstellung bewegt werden können, wobei mindestens eines der Gehäuseteile eine im wesentlichen ebene Auflagefläche (24; 48) aufweist und die rutschfesten Auflageeinrichtungen (54, 134) umfasst.

9. Tragbares Funkkommunikationsgerät nach Anspruch 8, wobei die Gehäuseteil (12; 16) miteinander durch ein Gelenk verschwenkbar verbunden sind.

10. Tragbares Funkkommunikationsgerät nach den Ansprüchen 8 oder 9, wobei eine Tastatur (26) innerhalb des ersten Gehäuseteils (12) vorgesehen ist und eine Anzeigeeinrichtung (15) innerhalb des zweiten Gehäuseteiles (16) eingesetzt ist und wobei der erste Gehäuseteil (12) die Auflagefläche (24; 48) definiert, wenn sich die Gehäuseteile in der Betriebsstellung befinden.

11. Tragbares Funkkommunikationsgerät nach einem der Ansprüche 7 bis 10, wenn diese abhängig von Anspruch 3 sind, wobei eine Antenne (40) an der Spitze des ersten Gehäuseteils (12) angeordnet ist und hinter dem zweiten Gehäuseteil (16) angeordnet ist, wenn die Gehäuseteile in ihre Betriebsstellung bewegt sind.

## Revendications

1. Appareil de radiocommunication mobile, tel qu'un téléphone mobile (10), comprenant un boîtier (12 ; 16) ayant une face avant avec des moyens d'interface utilisateur (26 ; 50) et une face arrière opposée, dans lequel la face arrière du boîtier définit au moins partiellement une surface de support extérieure sensiblement planaire (24 ; 48) comprenant des moyens de support antidérapants (54 ; 134) pour supporter ledit appareil de radiocommunication mobile, dans lequel lesdits moyens de support (54 ; 134) comprennent une couche (134) ayant sur cette dernière une pluralité de sections de support élevées (54) faisant saillie à travers des ouvertures correspondantes de ladite surface de support (24) et étant positionnées à une distance l'une de l'autre, **caractérisé en ce que** les sections de support (54) sont conçues pour avoir un profil-champignon faisant saillie à travers les ouvertures correspondantes de ladite surface de support (24) de telle sorte que chaque tête du profil-champignon (54) engage la surface extérieure de la surface de support (24) afin de fixer les moyens de support (54, 134) à la surface de support.

2. Appareil de radiocommunication mobile selon la revendication 1, dans lequel lesdits moyens de support (54, 134) sont faits à partir d'un matériau flexible antidérapant, tel que du caoutchouc synthétique ou naturel ou tout élastomère artificiel.

3. Appareil de radiocommunication mobile selon les revendications 1 ou 2, dans lequel le matériau desdits moyens de support (54, 134) contient des composants conducteurs électriquement pour fournir un blindage magnétique et électromagnétique.

4. Appareil de radiocommunication mobile selon la revendication 3, dans lequel lesdits composants conducteurs sont choisis parmi l'un des additifs métalliques, des additifs en silicium ou des additifs en carbone ou une combinaison quelconque de ces derniers.

5. Appareil de radiocommunication mobile selon l'une quelconque des revendications précédentes, dans lequel lesdits moyens de support (54) comprennent une série de sections parallèles élevées s'étendant sensiblement de façon transversale à la direction longitudinale de l'appareil de radiocommunication mobile.

6. Appareil de radiocommunication mobile selon l'une quelconque des revendications précédentes, dans lequel lesdites sections élevées sont insérées à travers des ouvertures correspondantes (138) de la surface de support (24) à partir de derrière.

7. Appareil de radiocommunication mobile selon la revendication 6, dans lequel ladite couche de support (134) comprend un tapis en caoutchouc ayant des extensions en caoutchouc parallèles élevées incorporées sur ce dernier, lesquelles extensions sont reçues dans les fentes correspondantes fournies sur la surface de support (24 ; 48), dans lequel lesdites extensions en caoutchouc sont adaptées pour être tirées à travers lesdites fentes sur ladite surface de support (24 ; 48) en appliquant un vide sur la surface de support (24 ; 48).

8. Appareil de radiocommunication mobile selon l'une quelconque des revendications précédentes, dans lequel ledit boîtier comprend au moins une première (12) et une seconde (16) parties du boîtier, dans lequel lesdites parties du boîtier sont connectées de façon mobile l'une à l'autre permettant auxdites parties du boîtier d'être déplacées entre une première position ou position de repos et une seconde position ou position de fonctionnement, dans lequel au moins l'une desdites parties du boîtier définissant une surface de support sensiblement planaire (24 ; 48) et comprenant lesdits moyens de support antidérapants (54 ; 134).

9. Appareil de radiocommunication mobile selon la revendication 8, dans lequel lesdites parties du boîtier (12 ; 16) sont connectées de façon rotative l'une à l'autre par une charnière.

10. Appareil de radiocommunication mobile selon les revendications 8 ou 9, dans lequel un clavier de téléphone (26) est logé à l'intérieur de ladite première partie du boîtier (12) et un moyen d'affichage (15) est logé à l'intérieur de ladite seconde partie du boîtier (16), et dans lequel ladite première partie du boîtier (12) définit ladite surface de support (24 ; 48) lorsque lesdites parties du boîtier sont dans ladite position de fonctionnement.

11. Appareil de radiocommunication mobile selon l'une quelconque des revendications 7 à 10 lorsqu'elle dépend de la revendication 3, dans lequel une antenne (40) est située au-dessus de ladite première partie du boîtier (12) et est agencée derrière ladite seconde partie du boîtier (16) lorsque lesdites parties du boîtier sont déplacées dans ladite position de fonctionnement.
